# EUROPÄISCHE PATENTSCHRIFT

(11) **EP 1 140 655 B1**
(45) Veröffentlichungstag und Bekanntmachung des Hinweises auf die Patenterteilung: **28.08.2002**
(21) Anmeldenummer: 99957240.7
(22) Anmeldetag: 13.12.1999
(51) Int. Cl.: B65D 81/00, A47J 31/06

(54) **BRÜHBEUTEL FÜR EINE FILTERKAFFEEBRÜHVORRICHTUNG**
BREWING BAG FOR A FILTER COFFEE BREWING DEVICE
SACHET POUR INFUSION, A UTILISER DANS UN DISPOSITIF D'INFUSION POUR CAFE A FILTRE

(30) Priorität: 08.01.1999 CH 3399; 11.10.1999 CH 185099
(43) Veröffentlichungstag der Anmeldung: 10.10.2001
(73) Patentinhaber: A. Kuster Sirocco-Kaffee AG, 8716 Schmerikon (CH)
(72) Erfinder: DEL BON, Franco, CH-4663 Aarburg (CH); GRÜNIGER, Ralph, CH-8645 Jona (CH)
(74) Vertreter: Kleewein, Walter, Dr.
(86) Internationale Anmeldenummer: CH9900599
(87) Internationale Veröffentlichungsnummer: WO00040476

(56) Entgegenhaltungen:
- EP-A- 0 249 700
- EP-A- 0 361 569
- EP-A- 0 806 373
- DE-A- 3 504 441
- US-A- 3 615 708

## Beschreibung

Die Erfindung betrifft einen Brühbeutel aus flüssigkeitsdurchlässigem Filtermaterial zum Einsatz in einer Filterkaffeebrühvorrichtung gemäss dem Oberbegriff des unabhängigen Anspruchs 1. Die Erfindung betrifft weiter eine mit einem solchen Brühbeutel ausgestattete Filterkaffeebrühvorrichtung gemäss dem Oberbegriff des unabhängigen Anspruchs 4. Ferner betrifft die Erfindung ein Verfahren zur Herstellung eines Brühbeutels für eine Filterkaffeebrühvorrichtung gemäss dem Oberbegriff des unabhängigen Anspruchs 3.

Kommerzielle Filterkaffeebrühvorrichtungen, wie sie insbesondere in Bordküchen von Flugzeugen eingesetzt werden, arbeiten in der Regel mit in Brühbeuteln verpacktem gemahlenem Kaffee. Solche Filterkaffeebrühvorrichtungen umfassen typischerweise einen Speisekopf zur Bereitstellung von heissem, unter Überdruck stehenden Brühwasser, einen üblicherweise zylindrischen Brüheinsatz zur Aufnahme eines den Kaffee enthaltenden Brühbeutels, eine Anhebeeinrichtung, um den Brüheinsatz in dichtende Anlage mit dem Speisekopf zu bringen, und einen Auffangbehälter für den gebrühten Kaffee.

Die für diese Zwecke üblicherweise eingesetzten Brühbeutel, welche je nach Grösse bis zu etwa 200 g Kaffee enthalten, haben die Gestalt eines kreisförmigen Kissens mit annähernd linsenförmigem Querschnitt. Der Beutel besteht dabei im wesentlichen aus zwei Kreisscheiben aus flüssigkeitsdurchlässigem Filtermaterial, welche längs ihrer Umfangsränder durch Kalt- oder Heisspressung/prägung miteinander verbunden sind. Die miteinander verbundenen Umfangsränder bilden einen radialen Umfangsflansch in der Mittenebene des Beutels.

Zum Gebrauch werden diese kissenförmigen, auf die Grösse des Brüheinsatzes abgestimmten Beutel so in den zylindrischen Brüheinsatz eingelegt und mit den Fingern zurechtgestopft, dass sich der durch die verbundenen Umfangsränder gebildete Umfangsflansch des Beutels noch oben umbiegt und möglichst glatt an die Innenwand des Brüheinsatzes anlegt. Aufgrund der Form des Flansches und seiner zwar geringen, aber doch vorhandenen Eigensteifigkeit liegt der Flansch erfahrungsgemäss meistens nicht dicht und gleichmässig an der Innenwand an, sondern verläuft in der Regel etwas wellig. Durch diese Welligkeit bilden sich aber unerwünschte sekundäre Strömungspfade für das Brühwasser am Brühbeutel vorbei, welche durch den Überdruck des Brühwassers zusätzlich noch begünstigt werden. Dadurch, dass ein Teil des Brühwassers über die sekundären Strömungswege am im Brühbeutel befindlichen Kaffee vorbeifliesst, wird die Qualität des so gebrühten Kaffees jedoch erheblich beeinträchtigt. Wegen des gesteigerten Geschmacksanspruchs im modernen Reiseverkehr und dem ständigen Streben der Fluggesellschaften nach verbesserten Dienstleistungen auch im kulinarischen Bereich werden jedoch an die Qualität des gebrühten Kaffees sehr hohe Anforderungen gestellt, welche mit den herkömmlichen Filterkaffeebrühvorrichtungen nicht immer und in reproduzierbarem Masse erfüllt werden können.

Aus der gattungsbildenden EP-A-0 249 700 ist eine Filterkaffeebrüheinrichtung mit einem aus zwei Filterlagen bestehenden Brühbeutel bekannt, der im in den Brüheinsatz eingelegten Zustand eine dem letzteren angepasste, im wesentlichen etwa kegelstumpfförmige Gestalt mit einem Bodenteil, einem mit dem Bodenteil einstückigen Mantelteil und einem Deckelteil aufweist, wobei der Deckelteil zusammen mit dem Mantelteil einen relativ breiten bzw. hohen, doppelwandigen überstehenden Kragen bildet. Der Boden- und der Mantelteil werden durch die untere Filterlage und der Deckelteil durch die obere Filterlage gebildet. Im Bereich des Kragens sind die beiden Filterlagen dicht miteinander verbunden. In der Brüheinrichtung ist oberhalb des Brühbeutels ein Heiswasserauslass vorgesehen, durch welchen im Betrieb heisses Brühwasser auf den Deckelteil des Beutels zugeführt wird. Die lichte Höhe zwischen dem Boden des Brüheinsatzes und dem Heisswasserauslass ist realtiv gering gehalten, so dass sich der Heisswasserauslass in relativ geringem Abstand über dem Deckelteil des (noch trockenen) Brühbeutels befindet. Wenn Heisswasser zugeführt wird, bläht sich der Deckelteil des Brühbeutels durch aufgrund der Hitze aus dem in ihm enthaltenen Kaffeepulver entweichende Luft auf und legt sich dadurch relativ satt an den Heisswasserauslass an. Dadurch soll es zu einer zentralen Einleitung des Brühwassers in den Brühbeutel und als Folge davon zu einer guten Auslaugung des Kaffeepulvers kommen.

Durch die vorliegende Erfindung soll nun ausgehend vom gattungsbildenden Brühbeutel ein anderer Brühbeutel geschaffen werden, der einerseits keine komplizierte Manipulation beim Einlegen des Brühbeutels in den Brüheinsatz erfordert und anderseits ein optimales Brühergebniss gewährleistet, wobei qualitätsbeeinträchtigende sekundäre Strömungswege für das Brühwasser vermieden werden.

Diese der Erfindung zugrundeliegende Aufgabe wird durch eine spezielle Formgebung des erfindungsgemässen Brühbeutels gelöst, welcher durch die im unabhängigen Anspruch 1 beschriebenen Merkmale gekennzeichnet ist. Besonders vorteilhafte Ausgestaltungen und Weiterbildungen des Brühbeutels sind Gegenstand der abhängigen Ansprüche. Eine entsprechende, mit einem solchen Brühbeutel ausgestattete Filterkaffeebrühvorrichtung ist Gegenstand des unabhängigen Anspruchs 4. Ein Verfahren zur Herstellung des erfindungsgemässen Brühbeutels ist im Anspruch 3 beschrieben.

Durch die erfindungsgemässe Formgebung des Brühbeutels wird nicht nur ein optimaler Brühprozess gewährleistet, sondern es wird auch das Handling vereinfacht, indem sich der Beutel ohne Zurechtstopfen mühelos in den Brüheinsatz einlegen lässt. Dies ist auch aus hygienischer Sicht ein Vorteil.

Für hohen Qualitäts- bzw. Geschmacksansprüchen genügenden Kaffee müssen viele Einzelfaktoren sorgfältig aufeinander abgestimmt sein. Insbesondere gehören dazu auch die verwendeten Kaffee-Sorten bzw. Provenienzen, die Mischung, der Röstgrad, der Mahlgrad und so weiter. Der erfindungsgemässe Brühbeutel verhindert, dass die vom Kaffeehersteller aufwendig erarbeiteten Qualitätsstandards im Brühprozess teilweise oder sogar ganz verloren gehen.

Im folgenden wird die Erfindung anhand der Zeichnung näher erläutert. Es zeigen:
- Fig. 1: einen Längsschnitt durch die für das Verständnis der Erfindung wichtigsten Teile der erfindungsgemässen Filterkaffeebrühvorrichtung mit eingelegtem erfindungsgemässen Brühbeutel vor der Beaufschlagung mit Brühwasser,
- Fig. 2: einen Längsschnitt analog Fig. 1 während bzw. nach der Beaufschlagung mit Brühwasser,
- Fig. 3-7: Detailskizzen zur Erläuterung des erfindungsgemässen Verfahrens zur Herstellung des erfindungsgemässen Brühbeutels und
- Fig. 8: eine Schrägansicht des einsatzbereiten, mit Kaffeepulver befüllten erfindungsgemässen Brühbeutels.

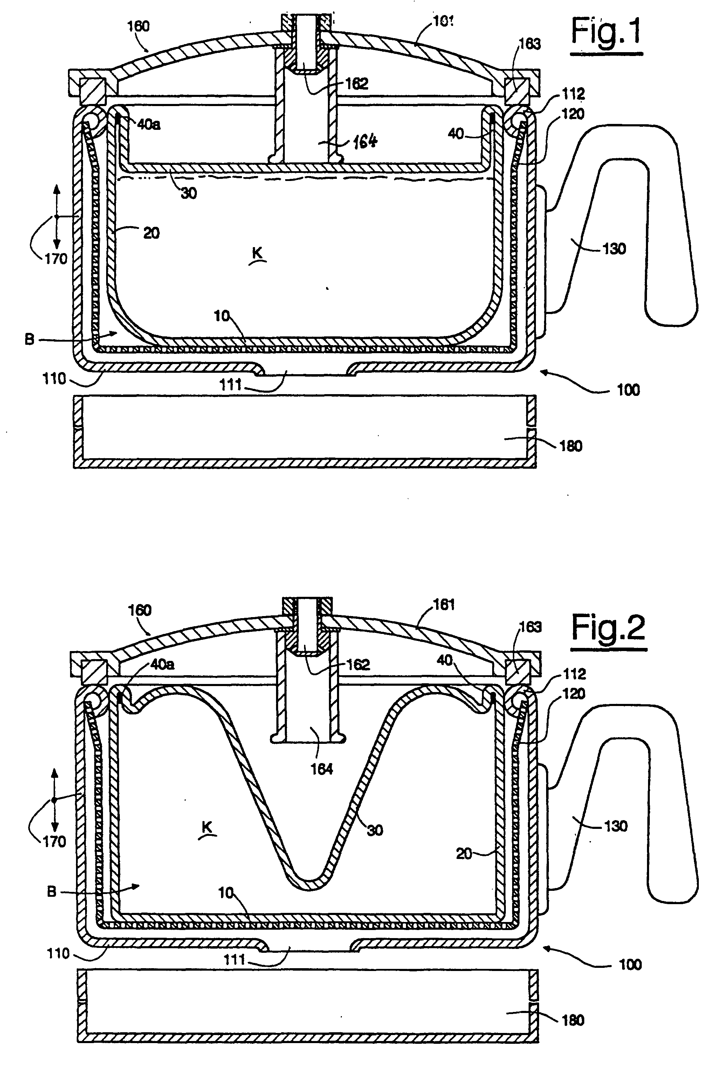

In den Figuren 1 und 2 sind schematisch die wichtigsten Komponenten der erfindungsgemässen Filterkaffeebrühvorrichtung dargestellt. Es sind dies ein Brüheinsatz 100, ein Speisekopf 160, von dem nur ein Andruckdeckel 161 dargestellt ist, eine Anhebevorrichtung, die nur durch einen Pfeil 170 symbolisch dargestellt ist, sowie ein Auffangbehälter 180 für den fertig gebrühten Kaffe.

Der zylindrische Brüheinsatz 100 ist an sich herkömmlich und umfasst einen oben offenen, im wesentlichen topfförmigen Metall-Behälter 110, in welchem ein ebenfalls oben offener und topfförmiger Metall-Siebkorb 120 angeordnet ist. Aussen am Behälter 110 befindet sich ein Traggriff 130, im Boden des Behälters 110 ist eine Abflussöffnung 111 angeordnet. Der Siebkorb 120 ist in einen Bördelrand 112 des Behälters 110 eingeklemmt.

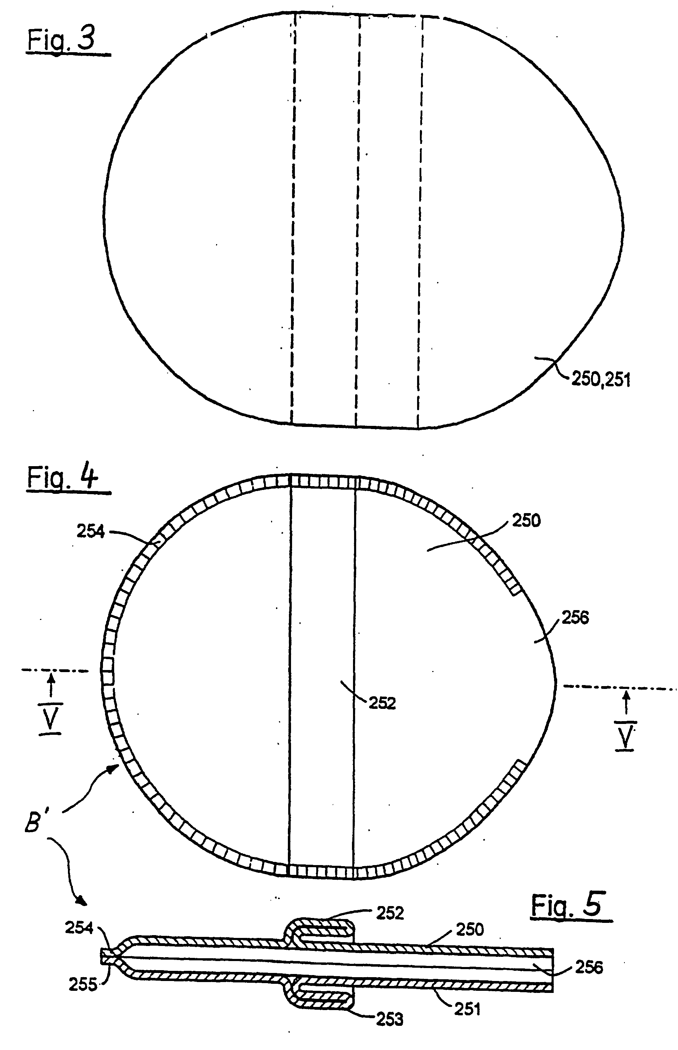

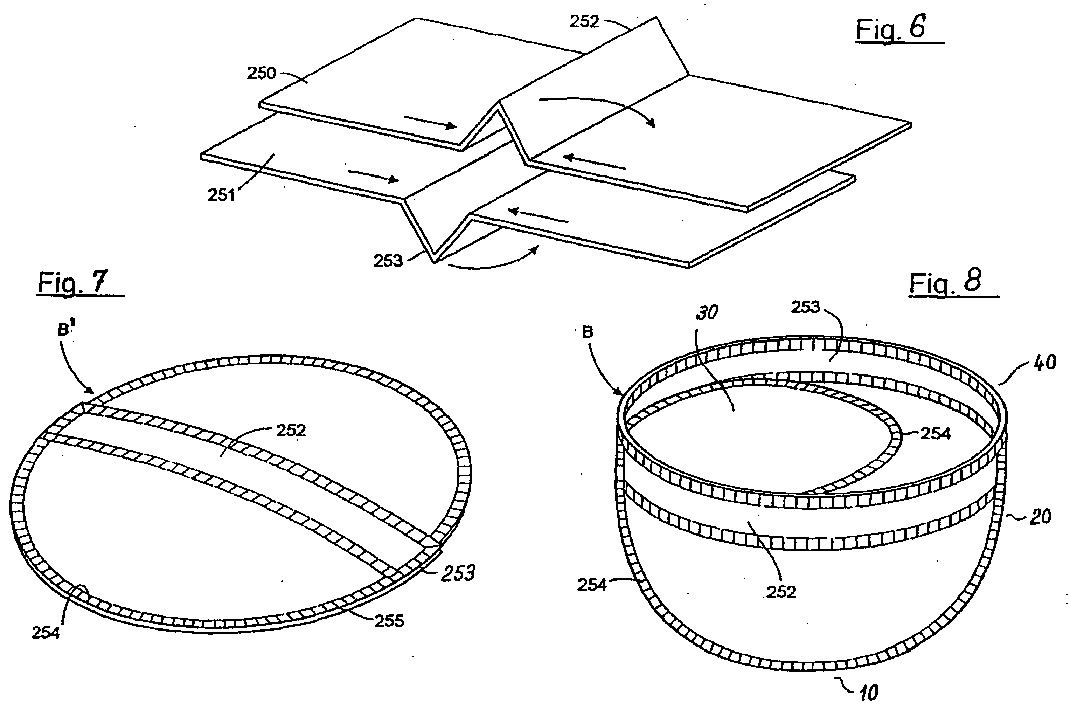

In den Behälter 110 bzw. den Siebkorb 120 ist der erfindungsgemässe Brühbeutel B eingelegt. Wie insbesondere auch aus aus der Figur 8 hervorgeht, weist der erfindungsgemässe Brühbeutel B eine im wesentlichen zylindrische Gestalt auf und besitzt einen gewölbten Bodenteil 10, einen Mantel 20 und einen im wesentlichen ebenen Deckelteil 30 sowie einen über den Deckelteil hinausragenden, im wesentlichen zylindrischen Kragen 40, welcher im wesentlichen eine Verlängerung des Mantels darstellt. Im Inneren des Brühbeutels B befindet sich gemahlener Kaffee K. Der Kragen 40 schmiegt sich rundum wellenfrei und dicht an die Innenwand des Brüheinsatzes 100 an und verhindert so, dass das Brühwasser aussen am Brühbeutel B vorbei durch den Brüheinsatz fliessen kann. Der Brühbeutel ist wie herkömmliche Beutel dieser Art aus einem flüssigkeitsdurchlässigen Filtermaterial, beispielsweise Filter-Vlies, gefertigt, welches eine gewisse Verformbarkeit aufweist. Weitere Details des erfindungsgemässen Brühbeutels B und seiner Herstellung ergeben sich aus der weiter unten folgenden Beschreibung anhand der Figuren 3-8.

Der Anpressdeckel 161 weist in seiner Mitte eine Auslassdüse 162 für Brühwasser und einen die Düse umgebenden Auslassstutzen 164 auf und besitzt an seinem Umfang einen Dichtungsring 163, der mit dem Öffnungsrand 112 des Brüheinsatzes 100 zusammenwirkt, wenn der Brüheinsatz mittels der Anpressvorrichtung 170 gegen den Andruckdeckel 161 gepresst wird. Der Speisekopf 160 stellt heisses, unter Überdruck stehendes Brühwasser zur Verfügung und enthält ein entsprechendes Heiz- und Pumpsystem oder ist an eine entsprechende Brühwasserzufuhrleitung angeschlossen.

Mit Ausnahme des Auslassstutzens 164 ist die erfindungsgemässe Filterkaffeebrühvorrichtung soweit an sich herkömmlich aufgebaut und bedarf deshalb für den Fachmann keiner näheren Erklärung.

Der erfindungsgemäss vorgesehene, die Auslassdüse 162 umgebende oder diese enthaltende Auslassstutzen 164 ist in seiner Länge so bemessen, dass er bei eingesetztem und angehobenen Brüheinsatz 100 bis unmittelbar oder nahe an den Deckelteil 30 des eingelegten Brühbeutels B heranreicht.

Durch die dadurch erreichte unmittelbare Heranführung des Brühwassers an den Dekkelteil 30 des Brühbeutels B mittels des Auslassstutzens 164 und unterstützt durch die weiter unten erläuterte spezielle Ausbildung des Kragens 40 des Brühbeutels B ergibt sich während der Beaufschlagung mit Brühwasser eine in Fig. 2 gezeigte Verformung des Brühbeutels B, welche erfahrungsgemäss zu einer noch besseren Extraktion des im Brühbeutel befindlichen Kaffeepulvers und damit zu einer weiteren Qualitätssteigerung des erzeugten Kaffees führt.

Der erfindungsgemässe Brühbeutel B ist im wesentlichen zylindrisch ausgebildet. Anstatt zylindrisch kann er aber auch prismatisch mit insbesondere rechteckigem oder quadratischem Querschnitt ausgebildet sein, z.B. wenn er in einem prismatischen Brüheinsatz verwendet werden soll. Im folgenden wird jedoch der Einfachheit halber nur eine zylindrische Ausführungsvariante erläutert, für prismatische Ausführungsformen gelten die Erläuterungen sinngemäss.

Der Mantel 20 des Brühbeutel B ist erfindungsgemäss in der Nähe des Deckelteils 30 wandverstärkt, wobei diese Wandverstärkung im Bereich des Kragens 40 liegt und durch diesen selbst gebildet wird.

Der Brühbeutel B ist auf die Innenmasse des Brüheinsatzes, für den er bestimmt ist, abgestimmt. Dadurch, dass er im Unterschied zu herkömmlichen Beuteln einen aufrecht stehenden Kragen besitzt, kann er ohne besondere Manipulation ganz einfach und bequem in den Brüheinsatz eingelegt werden. Dabei liegt sein hochstehender Kragen 40 automatisch rundum satt am Innenrand 112 des Behälters 110 des Brüheinsatzes 100 an. Ein weiteres wichtiges Merkmal ist die genannte Wandverstärkung. Durch sie wird eine zusätzliche Durchflussbarriere für das Brühwasser geschaffen, so dass dieses zuverlässig in das Innere des Brühbeutels geleitet wird.

Es hat sich ferner als sehr vorteilhaft erwiesen, wenn der Deckelteil 30 des befüllten und geschlossenen Brühbeutels B nicht zu straff ist. Dies kann durch geeignete Bemessung des Deckelteils und auch des Füllgrads berücksichtigt werden.

Die Figuren 3-8 zeigen erläutern das erfindungsgemässe Verfahren zur Herstellung des erfindungsgemässen Brühbeutels.

Bei diesem Verfahren wird von zwei flachen, im wesentlichen ovalen Zuschnitten 250 bzw. 251 aus Filtervliesmaterial ausgegangen (Fig. 3), die etwa in der Mitte jeweils mit einer Bundfalte 252 bzw. 253 versehen werden. Der Vorgang der Herstellung der Bundfalten wird aus der schematischen Darstellung der Fig. 6 deutlich. Die Bundfalten 252 und 253 werden durch Pressen oder Prägen festgelegt und, so weit es geht, in die Ebene der Zuschnitte 250 bzw 251 umgelegt. Dies ist am besten aus der Schnittdarstellung der Fig. 5 erkennbar. Anschliessend werden die beiden Zuschnitte 250 und 251 an bzw. auf einander gelegt und längs des grössten Teils ihrer Umfangsränder 254 bzw. 255 mit einander verbunden, so dass ein im wesentlichen flacher Beutel B' entsteht, der an einer Stelle noch eine Öffnung 256 aufweist (Figuren 4-5).

Das klebmittelfreie Verbinden von Filtermaterialien der in Frage kommenden Art ist an sich bekannt und bedarf deshalb keiner näheren Erläuterung.

Jetzt wird der so hergestellte Beutel B' durch die Öffnung 256 mit Kaffeepulver befüllt und dann in herkömmlicher Weise verschlossen. Der befüllte, vorerst noch kissenförmige Beutel B' ist in Fig. 7 dargestellt.

Im letzten Herstellungsschritt wird nun der flache Beutel B' in eine zylindrische Form gebracht. Dies geschieht durch entsprechendes Auseinanderziehen der beiden Bundfalten 252 und 253 und durch Einwärtsstülpen des mit der inzwischen verschlossenen Öffnung 256 versehenen Teils des Beutels B' in bzw. unter das Niveau des durch die Bundfalten 252 und 253 gebildeten ringförmigen Kragens. Der fertige, im wesentlichen zylindrische erfindungsgemässe Beutel B ist in Fig. 8 dargestellt.

Ein wichtiges Merkmal des erfindungsgemässen Brühbeutels besteht darin, dass sein Kragen nicht über seine gesamte Höhe, sondern gar nicht oder, wie in Fig. 1 erkennbar, nur im obersten Bereich 40a versiegelt ist. Dadurch kann sich sein Deckelteil während der Beaufschlagung mit Brühwasser leichter verformen (Fig. 2), was zur schon erwähnten Verbesserung der Extraktioinswirkung beiträgt.

## Patentansprüche

1. Brühbeutel aus flüssigkeitsdurchlässigem Filtermaterial zum Einsatz in einer Filterkaffeebrühvorrichtung, welcher Brühbeutel im Einsatz einen Bodenteil (10), einen Mantel (20) und einen Deckelteil (30) sowie einen den Mantel verlängernden, über den Deckelteil hinausragenden doppelwandigen Kragen (40) aufweist, **dadurch gekennzeichnet, dass** der Brühbeutel (B) aus zwei im wesentlichen ovalen Zuschnitten (250,251) verformbaren Filtermaterials besteht, die jeweils eine Bundfalte (252,253) aufweisen und längs ihrer Umfangsränder (254,255) miteinander verbunden sind, wobei jeweils die auf einer Seite der Bundfalten (252,253) liegenden Teile der Zuschnitte (250,251) den Boden (10) und den Mantel (20) bilden und jeweils die auf der anderen Seite der Bundfalten (252, 253) liegenden Teile der Zuschnitte (250,251) den Deckelteil (30) bilden und wobei die beiden Bundfalten (252,253) den doppelwandigen Kragen (40) des Brühbeutels (B) bilden.

2. Brühbeutel nach Anspruch 1, **dadurch gekennzeichnet, dass** der doppelwandige Kragen (40) nicht oder nur in seinem obersten Bereich (40a) versiegelt ist.

3. Verfahren zur Herstellung eines Brühbeutels zum Einsatz in einer Filterkaffeebrühvorrichtung, wobei aus einem flüssigkeitsdurchlässigen Filtermaterial ein mit gemahlenem Kaffee befüllter Beutel (B) mit einem Bodenteil (10), einem Mantel (20) und einem Deckelteil (30) sowie mit einem über den Deckelteil hinausragenden doppelwandigen Kragen (40) gebildet wird, **dadurch gekennzeichnet, dass** von zwei ebenen, im wesentlichen ovalen Zuschnitten (250,251) aus verformbaren Filtermaterial ausgegangen wird, dass die beiden Zuschnitte mit je einer Bundfalte (252,253) versehen werden, dass die beiden Zuschnitte (250,251) längs ihrer Umfangsränder (254,255) zu einem mit einer Öffnung (256) versehenen flachen Beutel (B') zusammengefügt werden, dass der flache Beutel (B') durch die Öffnung (256) mit Karfeepulver befüllt und seine Öffnung (256) verschlossen wird, dass die beiden Bundfalten (252,253) zu einem den doppelwandigen Kragen (40) bildenden Ring auseinandergezogen werden, wobei die zu einer Seite der beiden Bundfalten (252,253) liegenden Teile der Zuschnitte (250,251) den Mantel (20) und den Bodenteil (10) des dabei entstandenen Beutels (B) bilden, und dass die zur anderen Seite der Bundfalten liegenden Teile der Zuschnitte einwärts gestülpt werden, um den Deckelteil (30) des so entstandenen Beutels (B) zu bilden.

4. Filterkaffeebrühvorrichtung mit einem Speisekopf (160) zur Zufuhr von heissem, unter Druck stehenden Brühwasser, einem Brüheinsatz (100) mit einem darin befindlichen, mit gemahlenem Kaffee gefüllten Brühbeutel (B), mit einer Anhebevorrichtung (170) um den Brüheinsatz (100) in dichtende Anlage mit dem Speisekopf (160) zu bringen und mit einem Auffangbehälter (180) für den gebrühten Kaffee, wobei der Brühbeutel (B) eine der Form des Brüheinsatzes (100) angepasste Gestalt mit einem Bodenteil (10), einem Mantel (20), einem Deckelteil (30) und einem über den Dekkelteil hinausragenden doppelwandigen Kragen (40) aufweist und sich der Kragen (40) ringsum satt an die Innenseite des Brüheinsatzes (100) anschmiegt, **dadurch gekennzeichnet, dass** der Brühbeutel (B) aus zwei im wesentlichen ovalen Zuschnitten (250,251) verformbaren Filtermaterials besteht, die jeweils eine Bundfalte (252,253) aufweisen und längs ihrer Umfangsränder (254,255) miteinander verbunden sind, wobei jeweils die auf einer Seite der Bundfalten (252,253) liegenden Teile der Zuschnitte (250,251) den Boden (10) und den Mantel (20) bilden und jeweils die auf der anderen Seite der Bundfalten (252, 253) liegenden Teile der Zuschnitte (250,251) den Deckelteil (30) bilden und wobei die beiden Bundfalten (252,253) den Kragen (40) des Brühbeutels (B) bilden, und dass der Speisekopf (160) mit einem Auslassstutzen (164) für das Brühwasser versehen ist, und dass der Auslassstutzen (164) bei eingesetztem und in Anlage mit dem Speisekopf (160) befindlichem Brüheinsatz (100) bis unmittelbar oder nahe an den Deckelteil (30) des in den Brüheinsatz (100) eingelegten Brühbeutels (B) reicht.

5. Filterkaffeebrühvorrichtung nach Anspruch 4, **dadurch gekennzeichnet, dass** der doppelwandige Kragen (40) des Brühbeutels (B) nicht oder nur in seinem obersten Bereich (40a) versiegelt ist.

## Claims

1. A brewing bag consisting of liquid-permeable filter material for use in a filter coffee brewing apparatus, which brewing bag when used has a bottom part (10), a jacket (20) and a cover part (30) as well as a double-walled collar (40) which extends the jacket and protrudes over the cover part, **characterised in that** the brewing bag (B) consists of two essentially oval blanks (250,251) of formable filter material which each have one flange crease (252,253) and which are joined along their circumferential edges (254,255), those parts of the blanks (250,251) lying on the one side of the flange creases (252,253) forming the bottom (10) and the jacket (20) and those parts of the blanks (250,251) lying on the other side of the flange creases (252,253) forming the cover part (30), the two flange creases (252,253) forming the double-walled collar (40) of the brewing bag (B).

2. A brewing bag according to claim 1, **characterised in that** the double-walled collar (40) is not sealed or is only sealed in its top area (40a).

3. A process for the production of a brewing bag for use in a filter coffee brewing apparatus, where a brewing bag (B) filled with coffee is formed from a liquid-permeable filter material with a bottom part (10), a jacket (20) and a cover part (30) as well as with a double-walled collar (40) protruding over the cover part, **characterised by** starting from two even and essentially oval blanks (250,251) of formable filter material, providing the two blanks with one flange crease (252,253) each, joining the two blanks (250,251) along their circumferential edges (254,255) to form a flat bag (B') provided with an aperture (256), filling the flat bag (B') through the aperture (256) with coffee powder and closing its aperture (256), drawing the two flange creases (252,253) apart to form a ring forming the double-walled collar (40), those parts of the blanks (250,251) lying on the one side of the two flange creases (252,253) forming the jacket (20) and the bottom part (10) of the bag (B) thus obtained and those parts of the blanks lying on the other side of the flange creases being folded inwards to form the cover part (30) of the bag (B) thus obtained.

4. A filter coffee brewing apparatus with a feed head (160) for the inlet of hot brewing water under overpressure, with a brewing inset (100) in which there is a brewing bag (B) filled with ground coffee, with a lifting device (170) for bringing the brewing inset (100) into leakproof arrangement with the feed head (160) and with a collecting vessel (180) for the brewed coffee, the brewing bag (B) being of a shape matching the form of the brewing inset (100) and having a bottom part (10), a jacket (20), a cover part (30) and a double-walled collar protruding over the cover part (40), the collar (40) snuggling closely all round to the interior wall of the brewing inset (100), **characterised in that** the brewing bag (B) consists of two essentially oval blanks (250,251) of formable filter material which each have one flange crease (252,253) and which are joined along their circumferential edges (254,255), those parts of the blanks (250,251) lying on the one side of the flange creases (252,253) forming the bottom (10) and the jacket (20) and those parts of the blanks (250,251) lying .on the other side of the flange creases (252,253) forming the cover part (30), the two flange creases (252,253) forming the collar (40) of the brewing bag (B), and **in that** the feed head (160) is provided with a discharge muff (164) for the brewing water, and **in that** when the brewing inset (100) is inserted and in arrangement with the feed head (160) the discharge muff (164) extends directly to or near to the cover part (30) of the brewing bag (B) which is inserted in the brewing inset (100).

5. A filter coffee brewing apparatus according to claim 4, **characterised in that** the double-walled collar (40) of the brewing bag (B) is not sealed or is sealed only in its top area (40a).

## Revendications

1. Sachet d'infusion en matériau filtrant perméable aux liquides pour un dispositif de préparation de café filtre, ce sachet comportant un fond (10), un manteau (20) et un couvercle (30) ainsi qu'un col à double paroi (40) prolongeant le manteau et s'étendant par dessus le couvercle, **caractérisé en ce que** le sachet (B) comprend deux pièces ovales (250, 251) découpées dans un matériau filtrant déformable, qui comportent respectivement un pli multiple (252, 253) et qui sont assemblés le long de leur bord périphérique (254, 255), **en ce que** les parties des pièces ovales découpées (250, 251) disposées d'un côté des plis multiples (252, 253) constituent le fond (10) et le manteau (20), **en ce que** les parties des pièces ovales découpées (250, 251) disposées de l'autre côté des plis multiples (252, 253) constituent le couvercle (30) et **en ce que** les deux plis multiples (252, 253) constituent le col à double paroi (40) du sachet (B).

2. Sachet d'infusion selon la revendication 1, **caractérisé en ce que** le col à double paroi (40) n'est pas scellé ou n'est scellé que dans sa zone supérieure (40a).

3. Procédé de fabrication d'un sachet d'infusion pour un dispositif de préparation de café filtre, ce sachet (B) rempli de café moulu, comportant un fond (10), un manteau (20) et un couvercle (30) ainsi qu'un col à double paroi (40) prolongeant le manteau et s'étendant par dessus le couvercle au moyen d'un matériau filtrant perméable aux liquides, **caractérisé en ce que** l'on prend initialement deux pièces ovales découpées (250, 251) dans un matériau filtrant déformable, **en ce que** l'on pourvoit les deux pièces ovales découpées respectivement d'un pli multiple (252, 253), **en ce que** l'on assemble les deux pièces ovales découpées (250, 251) le long de leur bord périphérique (254, 255) pour former un sachet plat (B') pourvu d'une ouverture (256), **en ce que** ledit sachet plat (B') est rempli de poudre de café et ensuite scellé, **en ce que** les deux plis multiples (252, 253) sont étirés pour former un col à double paroi (40) de forme annulaire, **en ce que** l'on constitue le fond (10) et le manteau (20) du sachet (B) fini avec les parties des pièces ovales découpées (250, 251) disposées d'un côté des plis multiples (252, 253) et **en ce que** l'on retrousse les parties des pièces ovales découpées (250, 251) disposées de l'autre côté des plis multiples (252, 253) pour former le couvercle (30) du sachet (B) fini.

4. Dispositif de préparation de café filtre comportant une tête d'alimentation (160) pour de l'eau chaude d'infusion mise sous pression, un équipement d'infusion (100) dans lequel est disposé un sachet d'infusion (B) rempli de café moulu, un dispositif de support (170) pour amener l'équipement d'infusion (100) en appui étanche avec la tête d'alimentation (160) et un récipient (180) pour le café infusé, dans lequel le sachet d'infusion (B) a une forme adaptée au profil de l'équipement d'infusion (100), ce sachet comportant un fond (10), un manteau (20) et un couvercle (30) ainsi qu'un col à double paroi (40) prolongeant le manteau et s'étendant par dessus le couvercle, ce col (40) étant plaqué étroitement contre la paroi intérieure de l'équipement d'infusion (100), **caractérisé en ce que** le sachet (B) comprend deux pièces ovales (250, 251) découpées dans un matériau filtrant déformable, qui comportent respectivement un pli multiple (252, 253) et qui sont assemblés le long de leur bord périphérique (254, 255), **en ce que** les parties des pièces ovales découpées (250, 251) disposées d'un côté des plis multiples (252, 253) constituent le fond (10) et le manteau (20), **en ce que** les parties des pièces ovales découpées (250, 251) disposées de l'autre côté des plis multiples (252, 253) constituent le couvercle (30), **en ce que** les deux plis multiples (252, 253) constituent le col à double paroi (40) du sachet (B), ce dispositif comportant une tubulure de remplissage (164) de l'eau d'infusion et cette tubulure s'étendant jusqu'à proximité ou en contact avec le couvercle (30) lorsque l'équipement d'infusion (100) est en place et en appui contre la tête d'alimentation (160) du sachet (B) disposé dans le dispositif d'infusion (100).

5. Dispositif de préparation de café filtre selon la revendication 4, **caractérisé en ce que** le col à double paroi (40) du sachet d'infusion (B) n'est pas scellé ou n'est scellé que dans sa zone supérieure (40a).
